# EUROPÄISCHE PATENTSCHRIFT

(11) **EP 2 073 006 B1**
(45) Veröffentlichungstag und Bekanntmachung des Hinweises auf die Patenterteilung: **20.03.2013**
(21) Anmeldenummer: 09004147.6
(22) Anmeldetag: 28.10.2003
(51) Int. Cl.: G01N 33/53, G01N 21/64, B01L 3/00, G01N 21/86, G01N 35/00, G01N 21/84

(54) **Flexibles biologisches Microarray**
Flexible biological microarray
Micro-réseau biologique flexible

(30) Priorität: 29.10.2002 DE 10250495
(43) Veröffentlichungstag der Anmeldung: 24.06.2009
(62) Teilanmeldung aus: 03773672.5
(73) Patentinhaber: Endress+Hauser Conducta Gesellschaft für Mess- und Regeltechnik mbH+Co. KG, 70839 Gerlingen (DE)
(72) Erfinder: Lehmann, Mirko, Dr., 9642 Ebnat-Kappel (CH); Klapproth, Holger, Dr., 79108 Freiburg (DE); Sieben, Ulrich, Dr., 79279 Vörstetten (DE)
(74) Vertreter: Koslowski, Christine Adelheid

(56) Entgegenhaltungen:
- EP-A- 1 226 871
- EP-A- 1 249 702
- US-A- 5 922 550
- US-A- 6 060 256
- US-A1- 2002 147 330
- US-B1- 6 399 295

## Beschreibung

Die Erfindung betrifft ein biologisches Microarray nach dem Oberbegriff von Anspruch 1.

Ein derartiges Microarray ist aus US 6 060 256 bekannt. Es weist als Träger eine optisch transparente Polymerfolie auf, die mit einer Schicht aus Gold beschichtet ist. Auf der Goldschicht ist eine strukturierte Schicht mit Rezeptoren immobilisiert, die mit einem bestimmten Liganden eine spezifische Bindung eingehen können. Die Rezeptoren sind derart in einem Muster auf die metallische Schicht aufgedruckt, dass das Mikroarray hindurch tretendes Licht streut oder reflektiert, wenn die Liganden an den Rezeptoren gebunden sind. Mit Hilfe des Mikroarrays kann der Ligand nachgewiesen und mengenmäßig bestimmt werden. Das Microarray ermöglicht dabei jedoch nur eine relativ geringe Messempfindlichkeit.

Es besteht deshalb die Aufgabe, ein Microarray der eingangs genannten Art zu schaffen, das beim Nachweisen eines in der Probe enthaltenen Liganden eine hohe Messempfindlichkeit ermöglicht.

Diese Aufgabe wird mit den Merkmalen des Anspruchs 1 gelöst.

Durch die Mikrofasermembran ist das Verhältnis von Bindungsmolekülen zu Probenmolekülen gegenüber einem Microarray, bei dem die Rezeptoren direkt auf der Polymerfolie immobilisiert sind, signifikant erhöht. Die Polymerfolie kann außer zum Untersuchen einer Probe auch zum Abdichten eines die Probe enthaltenden Probenraumes gegen einen Sensor zur Detektion eines auf dem Microarray immobilisierten Liganden-Rezeptorkomplexes verwendet werden. Da der Träger transparent ist, kann die Probe durch den Träger hindurch optisch untersucht werden. Dabei kann ein zur optischen Untersuchung vorgesehener Strahlungsempfänger direkt an der Probe abgewandten Rückseite der Polymerfolie angeordnet sein. Der Strahlungsempfänger ist dann nur noch durch die dünne Polymerfolie von der Probe beabstandet, was eine hohe Ortsauflösung bei der Detektion von auf der Polymerfolie befindlichen Liganden-Rezeptorkomplexen ermöglicht. Die Polymerfolie kann aus Polystyrol-, Polycarbonat-, Polyacrylamid-, Polyacrylsäure-, Polyvinyichlorid-, Polyethylen, Polypropylen und/oder Polymethylmethacrylat (PMMA) bestehen oder ein Schicht aus einem solchen Material aufweisen.

Vorteilhaft ist, wenn der Träger als Band ausgebildet ist, wenn die Rezeptoren in Erstreckungsrichtung des Bands zueinander versetzt angeordnet sind, und wenn das Band mit den darauf befindlichen Rezeptoren vorzugsweise in Form einer Rolle magaziniert ist. Das mit den Rezeptoren beschichte Band ist also platzsparend magaziniert, so dass das Microarray auch bei einer großen, mit den Rezeptoren beschichteten Trägeroberfläche kompakte Abmessungen aufweisen kann. Das Microarray lässt sich daher gut lagern und handhaben. Aufgrund seiner bandförmigen Ausgestaltung lässt sich das Microarray außerdem kostengünstig herstellen.

Bei einer zweckmäßigen Ausgestaltung der Erfindung ist die durch das Microarray gebildete Rolle um ihre Achse drehbar in einer Kassette angeordnet, wobei die Kassette eine Austrittsöffnung für das freie Ende des bandförmigen Trägers aufweist. Somit ergibt sich eine Art Spender, aus dem das Microarray oder ein Abschnitt davon auf einfache Weise entnehmbar ist und in dem das Microarray vor Beschädigung geschützt ist.

Vorteilhaft ist, wenn der Träger maschinenlesbare Markierungen hat, die zumindest Bereiche aufweisen, die in einer vorbestimmten Lage relativ zu den Rezeptoren angeordnet sind. Die Lage der Markierungen lässt sich dann mit einer Lesevorrichtung gut detektieren, wodurch indirekt auch die Lage der Rezeptoren oder Rezeptorbereiche ermittelt werden kann.

Die Markierungen können eine Codierung zum Identifizieren der Art des ihnen jeweils zugeordneten Rezeptors und/oder der ihnen jeweils zugeordneten Rezeptoren aufweisen. Durch maschinelles Einlesen der Markierungen kann dann die Art der Rezeptoren auf einfache Weise bestimmt und beispielsweise bei der Auswertung von Messwerten einer an dem Microarray durchgeführten Messung berücksichtigt werden.

Bei einer zweckmäßigen Ausgestaltung der Erfindung weist das bandförmige Microarray eine Perforierung für den Eingriff einer Transporteinrichtung auf. Die Perforierung kann einerseits dazu benutzt werden, bei der Herstellung des Microarrays den Träger, auf dem die Rezeptoren immobilisiert werden sollen, an einer Auftragungseinrichtung für die Rezeptoren in einer definierten Lage zu positionieren. Andererseits ermöglicht es die Perforierung aber auch eine lagegenaue Positionierung des Microarrays an einem Sensor zum Detektieren von auf dem Träger befindlichen Rezeptor-Liganden-Komplexen. Dabei ist es sogar möglich, das bandförmige Microarray während einer Messung oder zwischen zwei Messungen weiterzutransportieren, um einen anderen Abschnitt des Microarrays an dem Sensor zu positionieren.

Nachfolgend sind Ausführungsbeispiele der Erfindung anhand der Zeichnung näher erläutert. Es zeigen zum Teil stärker schematisiert:
- Fig. 1: eine Seitenansicht einer Vorrichtung zum Immobilisieren von Rezeptoren auf einem bandförmigen Träger,
- Fig. 2: einen Querschnitt durch eine Vorrichtung zur Detektion von in einer zu untersuchenden Probe enthaltenen Liganden, mit einem auf einem Halbleiterchip ortsfest angeordneten biologischen Microarray,
- Fig. 3: einen Querschnitt durch eine Vorrichtung zur Detektion von in einer zu untersuchenden Probe enthaltenen Liganden, wobei das Microarray bandförmig ausgebildet und durch Umspulen zwischen zwei Spulen relativ zu einem Halbleiterchip bewegbar ist,
- Fig. 4: eine Aufsicht auf einen an dem Halbleiterchip positionierten Abschnitt eines bandförmigen Microarrays,
- Fig. 5: einen Querschnitt durch eine Durchflussmesskommer, und
- Fig.6: einen Teilquerschnitt durch den Halbleiterchip und das Microarray, wobei auf dem Träger des Microarrays ein Rezeptor-Liganden-Komplex immobilisiert ist, an den ein Lumineszenzstoff gebunden ist.

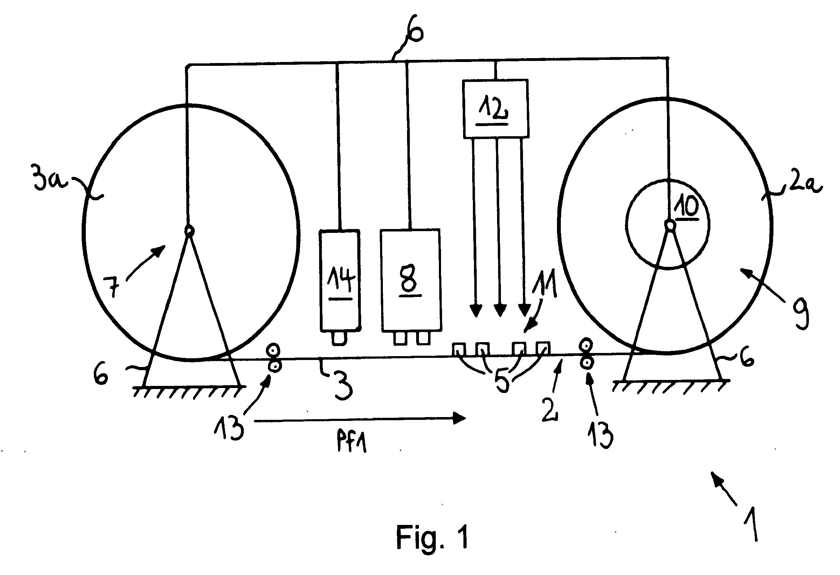

Eine in Fig. 1 im Ganzen mit 1 bezeichnete Vorrichtung zum Herstellen eines biologischen Microarrays 2, bestehend aus einem bandförmigen Träger 3 mit darauf immobilisierten, jeweils für einen bestimmten Liganden 4 spezifischen Rezeptoren 5, weist eine in der Zeichnung nur schematisch dargestellte Halterung 6 auf, an der ein erstes Magazin mit einer Aufnahme 7 für den bandförmigen, zu einer Rolle 3a gewickelten Träger 3 angeordnet ist. An der Aufnahme 7 ist die Rolle 3a um ihre Achse drehbar gelagert. Der Träger 3 ist als feuchtigkeitsdichte, optisch transparente Polymerfolie ausgebildet.

An der Halterung 6 ist ferner eine Auftragungseinrichtung 8 angeordnet, mit deren Hilfe die Rezeptoren 5 auf den Träger 3 aufgetragen werden können. Der bandförmige Träger 3 verläuft von der Rolle 3a zu der Auftragungseinrichtung 8 und von dieser zu einem zweiten Magazin, das eine Aufwickeleinrichtung 9 aufweist. Die Aufwickeleinrichtung 9 hat einen Spulenkörper 10, der um seine Achse drehbar an der Halterung 6 angeordnet ist. Auf dem Spulenkörper 10 ist der mit den Rezeptoren 5 beschichtete Träger 3, der das Microarray 2 bildet, zu einer Rolle 2a aufwickelbar.

Zwischen der Auftragungseinrichtung 8 und der Aufwickeleinrichtung 9 ist eine Bestrahlungsstelle 11 vorgesehen, an der die auf den Träger 3 aufgebrachten Rezeptoren 5 mit Hilfe einer Lichtquelle 12 mit UV-Licht bestrahlt und dadurch auf dem Träger 3 immobilisiert werden können. Zur Führung des Trägers 3 von der Rolle 3a zu der Aufwickeleinrichtung 9 ist eine Bandführungseinrichtung 13 vorgesehen, die Führungsrollen aufweist, zwischen denen der bandförmige Träger hindurchgeführt ist.

Zum Transport des Trägers 3 von der an der Aufnahme 7 angeordneten Rolle 3a in Richtung des Pfeils Pfl über die Auftragungseinrichtung 8 und die Bestrahlungsstelle 10 zu der Aufwickeleinrichtung 9 ist eine Transporteinrichtung vorgesehen, die in Zeichnung nicht näher dargestellt ist. Die Transporteinrichtung kann einen Servomotor als Antrieb aufweisen, der mit dem Spulenkörper 10 und/oder der Bandführungseinrichtung 1 3 in Antriebsverbindung steht.

Die Auftragungseinrichtung 8 weist mehrere Vorratsbehälter für unterschiedliche Arten von Rezeptoren 5 auf In den Vorratsbehältern sind die Rezeptoren 5 in flüssiger Form oder einem flüssigen Medium angeordnet. Die Rezeptoren können für unterschiedliche Liganden 4 spezifisch sein und/oder eine unterschiedliche Affinität zu einem bestimmten Liganden 4 aufweisen. Die einzelnen Vorratsbehälter für die Rezeptoren 5 sind jeweils mit einer Abgabeeinrichtung verbunden, die eine Austrittsöffnung für die Rezeptoren 5 aufweist. An den Austrittsöffnungsöffnungen können die Rezeptoren kontinuierlich oder diskontinuierlich abgegeben werden. Es ist aber auch möglich, dass mehrere Vorratsbehälter über Absperrventile mit einer gemeinsamen Austrittsöffnung verbunden sind. Die Austrittsöffnungen sind einer zu beschichtenden Flachseite des Trägers 3 zugewandt. Dabei sind die Austrittsöfi-nungen etwas von dem Träger 3 beabstandet. Die Abgabe der Rezeptoren 5 an den Austrittsöffnungen erfolgt vorzugsweise unter Druck in Form eines Sprühstrahls.

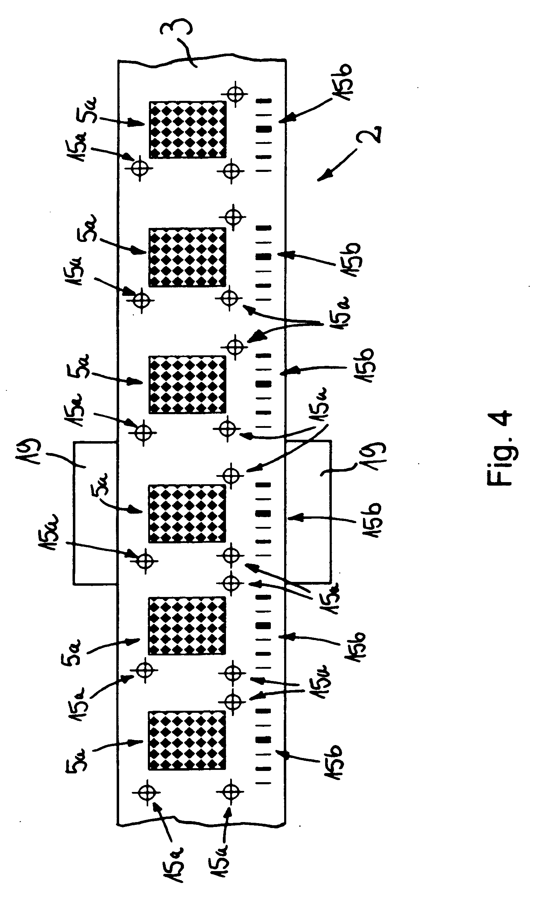

In Fig. 4 ist erkennbar, dass auf den Träger 3 eine Vielzahl von Rezeptorfeldern 5a aufgebracht werden, die in konstanten Abständen in Erstreckungsrichtung des Trägers 3 voneinander beabstandet sind. Die Rezeptorfelder 5a weisen eine etwa rechteckige Außenkontur auf Zwei einander gegenüberliegende Randbereiche der einzelnen Rezeptorfelder 5a verlaufen jeweils etwa parallel zur Längserstreckung Pf2 des Trägers 3. Jedes Rezeptorfeld 5a weist mehrere Rezeptoren 5 bzw. Rezeptorbereiche auf, die matrixförmig in mehreren Reihen und Spalten angeordnet sind.

An der Halterung 6 ist eine Markiereinrichtung 14 zum Anbringen von maschinenlesbaren Markierungen 15a, 15b an dem Träger 3 angeordnet. Die Markierungen 15a sind als Positionierhilfen ausgebildet und weisen ein Fadenkreuz auf, mit dessen Hilfe der Träger 3 mit den darauf befindlichen Rezeptorbereichen in einer vorbestimmten Lage beispielsweise an einem optischen Sensor positionierbar ist. Die Markierungen 15a sind als Strichcodes ausgebildet, in dem Informationen über die dazu jeweils benachbarten Rezeptorfelder 5a, insbesondere über die Art der Rezeptoren 5, gespeichert sind.

Es ist aber auch denkbar, dass der Träger 3 bereits fertig vormarkiert ist, die Markierungen also bereits auf den auf der Rolle 3a befindlichen Träger 3 aufgedruckt oder anderweitig angebracht sind. In diesem Fall kann die Vorrichtung 1 anstelle der Markiereinrichtung 14 eine Leseeinrichtung zum Detektieren der Markierungen 15a und/oder 15b aufweisen. Die Leseeinrichtung ist zum Positionieren des Trägers 3 an der Auftragungseinrichtung 8 in einer durch die Markierungen vorbestimmten Lage mit der Transporteinrichtung und/oder zum Auftragen des dem Strichcode entsprechenden Rezeptormaterials mit der Auftragungseinrichtung 8 verbunden. Gegebenenfalls ist es sogar möglich, dass der Träger 3 in mehreren Durchläufen jeweils mit unterschiedlichen Rezeptoren 5 beschichtet wird. Dies kann zum Beispiel in der Weise erfolgen, dass die Vorratsbehälter der Auftragungseinrichtung 8 für einen ersten Durchlauf mit einer Anzahl erster Rezeptoren befüllt werden, dass der Träger 3 danach mit diesen Rezeptoren bereichsweise beschichtet wird, wobei der Träger von der Rolle 3a über die Auftragungseinrichtung 8 zu der Aufwickeleinrichtung 9 transportiert wird, dass der beschichtete Träger 3 danach von der Aufwickeleinrichtung 9 auf die Rolle 3a zurückgespult wird, dass für einen zweiten Durchlauf die Vorratsbehälter der Auftragungseinrichtung 8 mit einer Anzahl zweiter Rezeptoren befüllt werden, und dass der Träger 3 danach mit diesen Rezeptoren 5 bereichsweise beschichtet wird, wobei die Rezeptoren 5 in dem zweiten Durchlauf an Stellen auf den Träger 3 aufgebracht werden, die bei dem ersten Durchlauf nicht mit Rezeptoren 5 beschichtet wurden. Gegebenenfalls können in entsprechender Weise weitere Durchläufe durchgeführt werden.

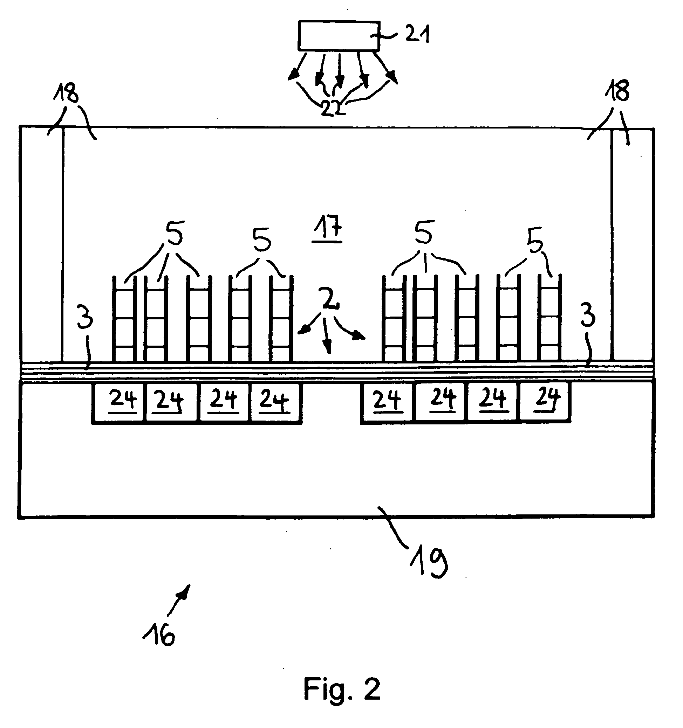

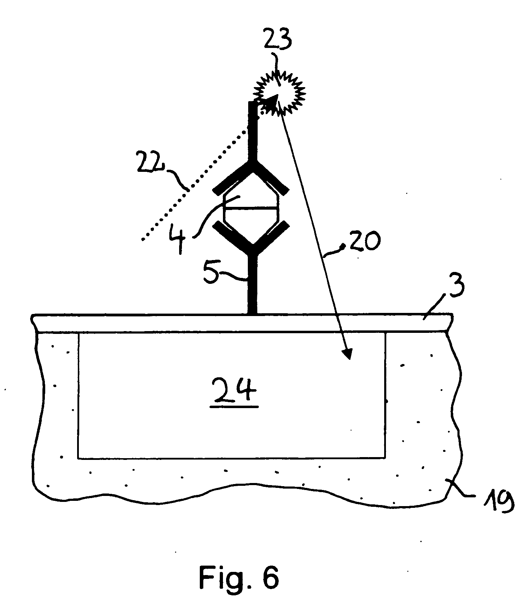

Eine in Fig. 2 gezeigte, im Ganzen mit 16 bezeichnete Vorrichtung zur Detektion mindestens eines in einer zu untersuchenden Probe enthaltenen Liganden 4 weist ein Behälterteil 18 auf, das einen Aufahmeraum 17 für die Probe umgrenzt. Das Behälterteil 18 hat an seiner Unterseite eine Analysenöffnung, an der ein Microarray 2 angeordnet ist. Das Microarray 2 weist als Träger 3 eine feuchtigkeitsdichte Polymerfolie auf, auf der matrixförmig Rezeptorbereiche angeordnet sind, in denen Rezeptoren 5 auf der Polymerfolie immobilisiert sind. Die Rezeptoren 5 können jeweils mit einem speziellen Liganden eine spezifische Bindung eingehen. Die Rezeptoren 5 sind in den Fig. 2 und 6 vergrößert und schematisch dargestellt. Die Polymerfolie ist an ihrem Umfangsrandbereich feuchtigkeitsdicht mit dem Behälterteil 18 verbunden. Dies kann beispielsweise dadurch erreicht werden, dass die Polymerfolie durch eine unterbrechungsfrei umlaufende Schweißnaht mit dem die Analysenöffnung umgrenzenden Rand Behälterteils 18 verschweißt ist.

Zur Anregung der Emission von Lumineszenzstrahlung 20 in Abhängigkeit von der Bindung des Liganden 4 an den Rezeptor 5 ist eine Strahlungsquelle 21 vorgesehen, die eine Anregungsstrahlung 22 in den Aufnahmeraum 17 abstrahlt. Die Strahlungsquelle 21 kann beispielsweise eine Leuchtdiode oder Laserdiode aufweisen.

Die Lumineszenzstrahlung 20 kann von einem auf dem Träger 3 immobilisierten Rezeptor-Liganden-Komplex (Chemolumineszenz) und/oder einem an den Rezeptor-Liganden-Komplex direkt oder indirekt gebundenen Lumineszenzstoff 23 ausgesandt werden, welcher den Rezeptor-Liganden-Komplex markiert.

An der dem Aufnahmeraum 17 abgewandten Rückseite der Polymerfolie ist ein Mikrochip 18 angeordnet, in den Strahlungsempfänger 24 zum Detektieren der Lumineszenzstrahlung integriert sind. Die Strahlungsempfänger 24 können beispielsweise als CCD- oder CMOS-Array ausgebildet sein. Der Mikrochip 18 ist durch die Polymerfolie bzw. den Träger 3 und das Behälterteil 18 gegen die in dem Aufnahmeraum 17 befindliche Probe abgedichtet.

Die Polymerfolie ist für die Lumineszenzstrahlung durchlässig und grenzt mit ihrer Rückseite direkt an den Mikrochip an. Dadurch kann die Lumineszenzstrahlung in unmittelbarer Nähe zum Abstrahlort und somit mit hoher Ortsauflösung detektiert werden.

Der Aufnahmeraum 1 7 kann auch durch wenigstens eine rinnenförmige Vertiefung gebildet sein, die beispielsweise durch einen Prägschritt in ein vorzugsweise plattenförmiges Behälterteil aus einem Polymerwerkstoff oder dergleichen Material eingebracht sein kann. Dabei verläuft die wenigstens eine Rinne parallel zur Erstreckungsebene der Polymerfolie und ist dieser derart zugewandt, dass die Rinnen zusammen mit der Polymerfolie Kapillaren umgrenzen, durch welche die Probe oder dergleichen Fluidum den Rezeptoren oder Rezeptorbereichen zugeführt werden kann. Dabei ist es sogar möglich, dass eine Kapillare mehrere der matrixförmig angeordneten Rezeptorbereiche miteinander verbindet. Gegebenenfalls kann das Behälterteil mehrere dieser Kapillaren aufweisen. Dadurch ist es insbesondere möglich, die Kapillaren mit einem oder mehreren Standardanalyten bekannter Konzentration zu befüllen, um die Vorrichtung zu kalibrieren.

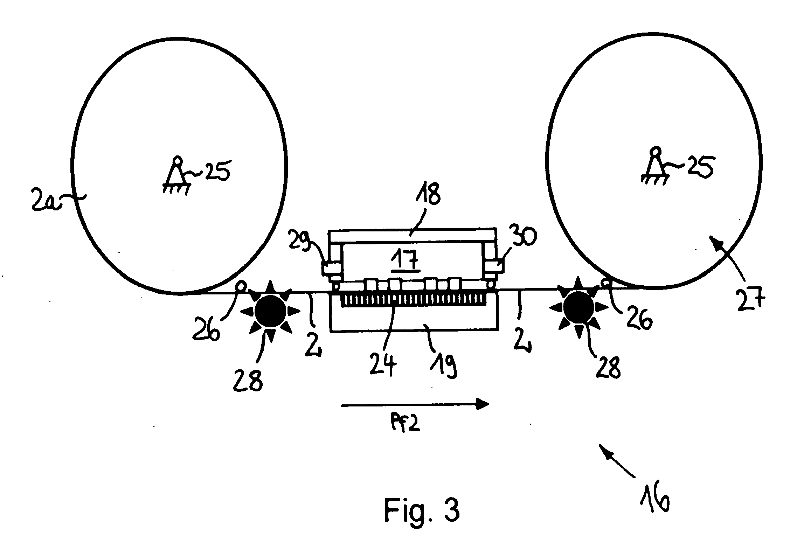

Bei der in Fig. 3 bis 5 gezeigten Vorrichtung 16 zur Detektion von in einer zu untersuchenden Probe enthaltenen Liganden ist das Microarray 2 bandförmig ausgebildet und auf einer Rolle 2a magaziniert. Es hat ein Polymerband als Träger 3, an dessen Oberfläche eine Vielzahl von Rezeptorfeldern 5a aufgebracht sind, die in der durch den Pfeil Pf2 markierten Erstreckungsrichtung des Trägers 3 voneinander beabstandet sind. Die Rezeptorfelder 5a weisen jeweils mehrere Rezeptoren 5 bzw. Rezeptorbereiche auf, die matrixförmig angeordnet sind.

Die Rolle 2a ist drehbar an einer Halterung 25 angeordnet. Mit Hilfe einer Führungseinrichtung 26 ist das Microarray 2 von der Rolle 2a zu in einen Mikrochip 19 integrierten Strahlungsempfängern 24 und von diesen zu einer Aufwickeleinrichtung 27 geführt. Zum Positionieren der auf der Rolle 3a befindlichen Rezeptoren 5 an den Strahlungsempfängern 24 ist eine Transporteinrichtung vorgesehen, die mit einem Antrieb verbundene Übertragungselemente 28 aufweist, die in eine Perforierung des Microarrays 2 eingreifen. In Fig. 3 ist erkennbar, dass der Mikrochip 19 zwischen den Übertragungselementen 28 angeordnet ist, so dass das Microarray 2 an den Strahlungsempfängern 24 des Mikrochips exakt positioniert ist.

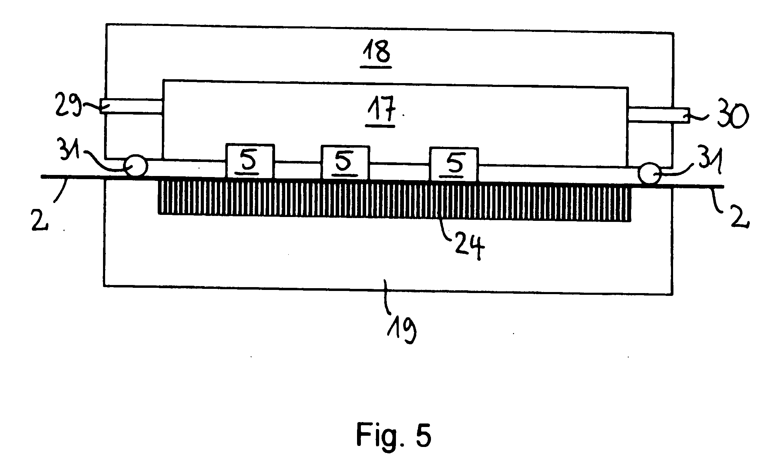

Wie in Fig. 5 besonders gut erkennbar ist, bildet das Behälterteil 15 mit dem Microarray 2 eine Durchflussmesskammer, die an dem Behälterteil 15 eine Einlassöffnung 29 und eine Auslassöffnung 30 aufweist. Das Microarray 2 bildet eine Wandung der Durchflussmesskammer, welche den Aufnahmeraum 17 für die Probe zu dem Mikrochip 19 hin abdichtet. Zwischen dem Behälterteil 15 und dem Microarray 2 ist eine Dichtung 31 angeordnet, die bei dem Ausführungsbeispiel nach Fig. 5 als Dichtring ausgebildet ist. Wie bei dem Ausführungsbeispiel nach Fig. 2 grenzt das Microarray 2 mit seiner dem Aufnahmeraum 17 abgewandten Rückseite direkt an den Mikrochip an. Dabei verläuft das Microarray 2 etwa parallel zur Erstreckungsebene des Mikrochips 19.

In dem von der Durchflussmesskammer umgrenzten Aufnahmeraum 17 kann ein Überdruck herrschen, durch den das Microarray 2 an den Mikrochip 19 angedrückt wird. Da das Microarray 2 nur eine geringe Wandstärke aufweist, sind die Strahlungsempfänger 24 dicht an den Rezeptoren angeordnet. Dadurch wird eine Detektion eines Liganden mit hoher Ortsauflösung ermöglicht.

Das Microarray 2 weist Markierungen 1 5a auf, mit deren Hilfe es in einer vorbestimmten Lage an dem Mikrochip 19 positionierbar ist. In den Mikrochip 19 Sensoren zum Detektieren der Markierungen 1 5a integriert, die mit der Transporteinrichtung in Steuerverbindung stehen. Außerdem weist das Microarray 2 Markierungen 15b auf, welche die Art des zu der Markierung 15b jeweils benachbarten Rezeptorfelds 5a codieren. In den Mikrochip 19 ist ein Sensor zum Lesen der Markierungen 15b integriert. Der Sensor ist mit einer Auswerteeinrichtung zur Verarbeitung der Codierung verbunden.

Mit der Vorrichtung 16 lassen sich auf einfache Weise eine Vielzahl von Rezeptorfeldern 5a an dem Aufnahmeraum 1 7 positionieren. Die Vorrichtung 16 ermöglicht deshalb eine automatisierte Durchführung einer großen Anzahl von Messungen.

Die Vorrichtung 1 zum Herstellen eines biologischen Microarrays 2, das zumindest einen bandförmigen, zu einer Rolle 3a gewickelten Träger 3 mit darauf immobilisierten Rezeptoren 5 aufweist, die jeweils mit einem bestimmten Liganden 4 eine spezifische Bindung eingehen können, hat also eine Halterung 6 mit einer Aufnahme 7, an der die Rolle 3a drehbar anbringbar ist. An der Halterung 6 ist eine Auftragungseinrichtung 8 zum Aufbringen der Rezeptoren 5 auf den Träger 3 angeordnet. Der Träger 3 ist mittels einer Bandführungseinrichtung 13 von der Aufnahme 7 über die Auftragungseinrichtung 8 zu einer Aufwickeleinrichtung 9 führbar. Der Träger 3 ist als feuchtigkeitsdichte Polymerfolie ausgebildet. Das Microarray 2 kann einen Aufnahmeraum 17 für eine zu untersuchende Probe gegen einen Sensoren zum Detektieren eines Rezeptor-Liganden-Komplexes aufweisenden Halbleiter-Mikrochip 19 abdichten.

## Patentansprüche

1. Biologisches Microarray (2) mit einem flexiblen, eine transparente und feuchtigkeitsdichte Polymerfolie aufweisenden Träger (3), auf dem Rezeptoren (5) immobilisiert sind, die jeweils mit einem bestimmten Liganden (4) eine spezifische Bindung eingehen können, **dadurch gekennzeichnet, dass** auf der Polymerfolie als Beschichtung eine Mikrofasermembran angeordnet ist, und dass die Rezeptoren (5) auf die Mikrofasermembran aufgebracht sind.

2. Microarray (2) nach Anspruch 1, **dadurch gekennzeichnet, dass** der Träger (3) als Band ausgebildet ist, dass die Rezeptoren (5) in Erstreckungsrichtung des Bands zueinander versetzt angeordnet sind, und dass das Band mit den darauf befindlichen Rezeptoren (5) vorzugsweise in Form einer Rolle (2a) magaziniert ist.

3. Microarray (2) nach Anspruch 1 oder 2, **dadurch gekennzeichnet, dass** die Rolle (2a) um ihre Achse drehbar in einer Kassette angeordnet ist, und dass die Kassette eine Austrittsöffhung für das freie Ende des bandförmigen Trägers (3) aufweist.

4. Microarray (2) nach einem der Ansprüche 1 bis 3, **dadurch gekennzeichnet, dass** der Träger (3) maschinenlesbare Markierungen (15a, 15b) hat, die zumindest Bereiche aufweisen, die in einer vorbestimmten Lage relativ zu den Rezeptoren (5) angeordnet sind.

5. Microarray (2) nach einem der Ansprüche 1 bis 4, **dadurch gekennzeichnet, dass** die Markierungen (1 5a, 15b) eine Codierung zum Identifizieren der Art des ihnen jeweils zugeordneten Rezeptors (5) und/oder der ihnen jeweils zugeordneten Rezeptoren (5) aufweist.

6. Microarray (2) nach einem der Ansprüche 1 bis 5, **dadurch gekennzeichnet, dass** das Microarray (2) eine Perforierung für den Eingriff einer Transporteinrichtung aufweist.

## Claims

1. Biological microarray (2) with a flexible support (3), comprising a transparent and moisture-proof polymer film, on which receptors (5) are immobilized, each of which is capable of forming a specific bond to a certain ligand (4), **characterized in that** a microfiber membrane is applied to the polymer film as a coating, and **in that** the receptors (5) are fitted on the microfiber membrane.

2. Microarray (2) as claimed in Claim 1, **characterized in that** the support (3) is designed as a belt, **in that** the receptors (5) are arranged in an offset pattern in the direction of elongation of the belt, and **in that** the belt, with the receptors located thereon (5), is preferably stored as a roll (2a).

3. Microarray (2) as claimed in Claims 1 or 2, **characterized in that** the roll (2a), which can rotate around its axis, is arranged in a box, and **in that** the box has an opening for the free end of the belt-like support (3).

4. Microarray (2) as claimed in one of the Claims 1 to 3, **characterized in that** the support (3) has machine-readable markers (15a, 15b) that at least present ranges that are arranged at a predefined position in relation to the receptors (5).

5. Microarray (2) as claimed in one of the Claims 1 to 4, **characterized in that** the markers (15a, 15b) have a code to identify the type of receptor (5) that they have been assigned, or to identify the receptor (5) that they have been assigned.

6. Microarray (2) as claimed in one of the Claims 1 to 5, **characterized in that** the microarray (2) has a perforation for contact with a transportation unit.

## Revendications

1. Microréseau biologique (2) avec un support (3) comportant un film polymère flexible, transparent et étanche à l'humidité, sur lequel sont immobilisés des récepteurs (5), qui sont capables d'entrer en liaison spécifique avec un ligand (4) déterminé, **caractérisé en ce qu'**une membrane en microfibres est disposée en tant que revêtement sur le film polymère, et **en ce que** les récepteurs (5) sont appliqués sur la membrane en microfibres.

2. Microréseau selon la revendication 1, **caractérisé en ce que** le support (3) est formé en tant que bande, **en ce que** les récepteurs (5) sont disposés de façon décalés les uns par rapport aux autres dans le sens d'extension de la bande, et **en ce que** la bande est emmagasinée de préférence sous la forme d'un rouleau (2a) avec les récepteurs (5), qui y sont appliqués.

3. Microréseau selon la revendication 1 ou 2, **caractérisé en ce que** le rouleau (2a) est disposé dans une cassette de façon à pouvoir tourner autour de son axe, et **en ce que** la cassette présente un orifice de sortie pour l'extrémité libre du support (3) en forme de bande.

4. Microréseau selon l'une des revendications 1 à 3, **caractérisé en ce que** le support (3) est pourvu de marques (15a, 15b) lisibles par une machine, lesquelles marques présentes au moins des zones, qui sont disposées dans une position prédéterminée par rapport aux récepteurs (5).

5. Microréseau selon l'une des revendications 1 à 4, **caractérisé en ce que** les marques (15a, 15b) présentent un codage destiné à l'identification du type de récepteur (5), qui leur est respectivement attribué et/ou des récepteurs, qui leurs sont respectivement attribués.

6. Microréseau selon l'une des revendications 1 à 5, **caractérisé en ce que** le microréseau (2) présente une perforation pour l'engagement d'un dispositif de transport.
